(19) Europäisches Patentamt
European Patent Office
Office européen des brevets

(11) **EP 4 682 764 A1**

(12) **EUROPEAN PATENT APPLICATION**
published in accordance with Art. 153(4) EPC

(43) Date of publication:
**21.01.2026 Bulletin 2026/04**

(21) Application number: 25758693.3

(22) Date of filing: **11.02.2025**

(51) International Patent Classification (IPC):
*G06N 3/0455* (2023.01)  *G06F 16/2457* (2019.01)
*G06F 16/334* (2025.01)  *G06F 16/338* (2019.01)
*G06F 18/2135* (2023.01)

(52) Cooperative Patent Classification (CPC):
**G06F 16/2457; G06F 16/334; G06F 16/338;
G06F 18/2135; G06N 3/0455**

(86) International application number:
**PCT/KR2025/099350**

(87) International publication number:
**WO 2025/178444 (28.08.2025 Gazette 2025/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 19.02.2024  KR 20240023196
05.06.2024  KR 20240073836

(71) Applicant: **LG Management Development Institute
Co., Ltd.
Seoul 07336 (KR)**

(72) Inventors:
• **YOON, Soyoung**
  **Seoul 08787 (KR)**
• **CHOI, Eunbi**
  **Seoul 07553 (KR)**
• **YUN, Hyeongu**
  **Seongnam-si Gyeonggi-do 13602 (KR)**
• **KIM, Yireun**
  **Seoul 07803 (KR)**

(74) Representative: **BCKIP Part mbB
MK1
Landsbergerstraße 98, 3.Stock
80339 München (DE)**

(54) **RE-RANKING SYSTEM, METHOD, AND PROGRAM FOR EXTRACTING PASSAGES HAVING HIGH RELEVANCE TO QUERY**

(57)    A re-ranking system, method, and program for extracting passages having higher relevance to a query are disclosed. The system may include at least one processor, and a memory storing one or more commands, wherein the at least one processor may execute the one or more commands stored in the memory to perform re-ranking of a plurality of passages by performing a plurality of tournament sortings, wherein the tournament sorting may include pairing first passages included in the passages in a specific number to divide the first passages into a plurality of groups, evaluating relevance between the first passages included in a group and a query for each group, and extracting passages having higher relevance up to a predetermined rank among the first passages to output the extracted first passages as second passages, and pairing the second passages in a specific number to divide the second passages into a plurality of groups, evaluating relevance between the second passages included in a group and the query for each group, and extracting passages having higher relevance up to a predetermined rank among the second passages to output the extracted second passages as third passages.

Fig 7

<(N+1)-TH TOURNAMENT SORTING>

<N-TH TOURNAMENT SORTING>

ENCODER-DECODER

p1 | k1 | p3 | p4 | p5

743b

740

p2

743a

p1 | p2 | p3 | p4 | p5

## Description

[Technical Field]

The present invention relates to a re-ranking system, method, and program for extracting passages having higher relevance to a query, and more particularly, the present invention relates to a re-ranking system, method, and program for extracting passages having higher relevance to a query among passages included in documents stored in a database.

[Background Art]

Recently, the importance of constructing efficient generative retrieval systems that can be universally applied, and more specifically, domain-specific, zero-shot, and unstructured knowledge-based retrieval systems, has been emphasized. As a method for this, a method of extracting and re-ranking passages having higher relevance to a query is being used.

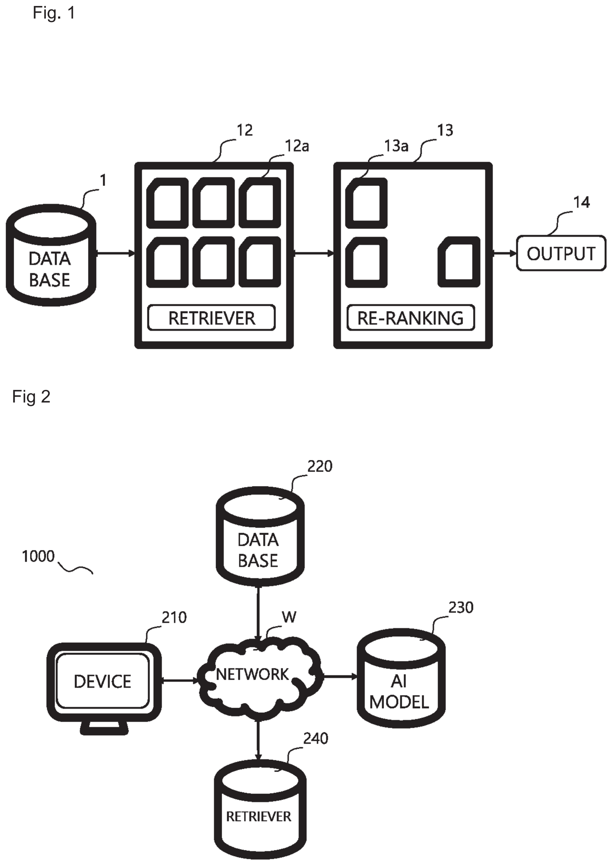

Referring to FIG. 1, the re-ranking proceeds in the following two operations. The first operation (initial retrieval) 12 is to find 100-1000 documents 12a related to the query from a large-scale database 11 (e.g., 11M documents included in Wikipedia, 8.8M documents included in MS MARCO, etc.). To this end, statistical retrieval methods such as BM25 or techniques such as Maximum Inner Product Search (MIPS) are used. The second operation {re-ranking} 13 is to re-rank the documents extracted in the initial retrieval to extract about 1-10 passages 13a having the highest relevance. Therefore, even when a query is input to a retriever or a large language model (LLM) that has not been fine-tuned for a specific domain, it is possible to output 14 passages having the highest relevance to each query.

In a prior art, cross-encoder models such as MonoT5 (Document Ranking with a Pretrained Sequence-to-Sequence Model, Rodrigo Nogueira et al., 2020) or RankT5 (RankT5: Fine-Tuning T5 for Text Ranking with Ranking Losses, Honglei Zhuang et al., 2022) have been used for re-ranking. However, since the above models use pointwise re-ranking for each document, the models have relatively poor capability in comparing relevance. In order to improve this disadvantage, listwise re-ranking models (The expando-mono-duo design pattern for text ranking with pretrained sequence-to-sequence models, Ronak Pradeep et al., 2021) using the LLMs have been developed, but the models have disadvantages of reduced efficiency due to a large size of the parametric model and causing a lost in the middle problem. (The lost in the middle refers to a problem in which position bias becomes strong for documents or passages located in the first part and the last part so the language model cannot understand information about documents located in the middle part.)

Another prior art, DuoT5 (The expando-mono-duo design pattern for text ranking with pretrained sequence-to-sequence models, Ronak Pradeep et al., 2021), compares relevance between documents through pairwise re-ranking that is a method of comparing each document against others, but this has the disadvantage of having high time complexity of O(n^2).

(Non-Patent Document 1) Document Ranking with a Pretrained Sequence-to-Sequence Model, Rodrigo Nogueira et al., 2020.

(Non-Patent Document 2) RankT5: Fine-Tuning T5 for Text Ranking with Ranking Losses, Honglei Zhuang et al., 2022.

(Non-Patent Document 3) The expando-mono-duo design pattern for text ranking with pretrained sequence-to-sequence models, Ronak Pradeep et al., 2021.

(Non-Patent Document 4) The expando-mono-duo design pattern for text ranking with pretrained sequence-to-sequence models, Ronak Pradeep et al., 2021.

[Disclosure]

[Technical Problem]

The technical problem to be solved by the present invention is to provide a re-ranking system, method, and program for extracting passages having higher relevance to a query among passages included in documents stored in a database.

The technical problems to be solved by the present invention are not limited to the above-described objects, and other objects not mentioned herein will become more apparent to those skilled in the art from the following description.

[Technical Solution]

A re-ranking system according to the present invention includes at least one processor, and a memory storing one or more commands, wherein the at least one processor executes the one or more commands stored in the memory to perform re-ranking of a plurality of passages by performing a plurality of tournament sortings, wherein the tournament sorting includes pairing first passages included in the passages in a specific number to divide the first passages into a plurality of groups, evaluating relevance between the first passages included in a group and a query for each group, and extracting passages having higher relevance up to a predetermined rank among the first passages to output the extracted first passages as second passages, and pairing the second passages in a specific number to divide the second passages into a plurality of groups, evaluating relevance between the second passages included in a group and the query for each group, and extracting passages having higher relevance up to a predetermined rank among the second passages to output the extracted second passages as third passages.

In the system, the first passages identical to the third passages output from at least one of the tournament sortings may not be used as targets for evaluating the relevance in any one or more of the tournament sortings performed thereafter.

In the system, at least one of the results of relevance evaluation performed in at least one of the tournament sortings may be reused in an operation of evaluating the relevance in any one or more of the tournament sortings performed thereafter.

In the system, the operation of evaluating the relevance may generate outputs in the order from lower relevance to higher relevance.

In the system, the relevance may be evaluated through an encoder-decoder structure, and the encoder-decoder structure may be a FiD architecture or a T5-base architecture.

In the system, the query or the passage may be converted into a vector from data stored in a database.

In the system, the specific number may be 5.

In the system, the predetermined rank may be the top 1st rank or the top 2nd rank.

A re-ranking method according to another aspect of the present invention is a method performed by at least one processor for executing a re-ranking of a plurality of passages by performing a plurality of tournament sortings, the method includes pairing first passages included in the passages in a specific number to divide the first passages into a plurality of groups, evaluating relevance between the first passages included in a group and a query for each group, and extracting passages having high relevance up to a predetermined rank among the first passages to output the extracted first passages as second passages, and pairing the second passages in a specific number to divide the second passages into a plurality of groups, evaluating relevance between the second passages included in a group and the query for each group, and extracting passages having higher relevance up to a predetermined rank among the second passages to output the extracted second passages as third passages.

In the method, the first passages identical to the third passages output from at least one of the tournament sortings may not be used as targets for evaluating the relevance in any one or more of the tournament sortings performed thereafter.

In the method, at least one of the results of relevance evaluation performed in at least one of the tournament sortings may be reused in an operation of evaluating the relevance in any one or more of the tournament sortings performed thereafter.

In the method, the operation of evaluating the relevance may generate outputs in the order from lower relevance to higher relevance.

In the method, the relevance may be evaluated through an encoder-decoder structure, and the encoder-decoder structure may be a FiD architecture or a T5-base architecture.

In the method, the query or the passage may be converted into a vector from data stored in a database.

In the method, the specific number may be 5.

In the method, the predetermined rank may be the top 1st rank or the top 2nd rank.

A program according to still another aspect of the present invention may be a program stored in a computer-readable recording medium to execute the re-ranking method according to embodiments of the present invention on a computer.

[Description of Drawings]

FIG. 1 is a conceptual diagram of re-ranking by extracting passages having higher relevance to an open-domain information query.
FIG. 2 is a schematic diagram of a re-ranking system for extracting passages having higher relevance to a query according to one embodiment of the present disclosure.

FIG. 3 is a re-ranking device for extracting passages having higher relevance to a query according to embodiments of the present invention.

FIG. 4 is a block diagram for explaining a method of selecting, as an output, passages corresponding to a predetermined rank or higher in relevance to a query using an encoder-decoder structure according to embodiments of the present invention.

FIG. 5 is a block diagram for explaining a process in which documents output from an encoder-decoder structure are output in an order from documents having lower relevance to documents having higher relevance according to embodiments of the present invention.

FIG. 6 is a block diagram for explaining a method of re-ranking passages by performing a plurality of tournament sortings {where a base operation unit (r) is "1" (up to the top 1st rank in relevance)} according to embodiments of the present invention.

FIG. 7 is a block diagram for extracting a plurality of passages having higher relevance to a query 410 by performing the tournament sorting a plurality of times according to embodiments of the present invention.

FIG. 8 is a block diagram for re-ranking passages by performing the plurality of tournament sortings {where the base operation unit (r) is "2" (from the top 1st rank to the top 2nd rank in relevance)} according to embodiments of the present invention.

FIG. 9 shows the results of comparing the complexity of the present invention with other models.

FIG. 10 shows the results of comparing the computational performance (Floating Point Operations per Second (FLOPs)) (x-axis) and the BEIR performance (y-axis) for evaluating relevance of passages of the present invention with other models.

FIG. 11 shows the results of comparing the present invention with pointwise models (MonoT5 and RankT5) in NDCG@10 based on BEIR.

FIG. 12 shows the results of comparing the present invention with listwise re-ranking models (RankGPT, RankVicuna, and RankZephyr) and a pairwise re-ranking model (DuoT5) that are prior arts based on NDCG@10.

[Modes of the Invention]

The following embodiments are provided as examples so that the spirit of the present invention can be sufficiently conveyed to those skilled in the art to which the present invention pertains. Therefore, the present invention is not limited to the embodiments described below and may be specified in other forms.

The same reference numerals refer to the same components throughout the present invention. The present invention does not describe all elements of the embodiments, and common content in the art to which the present invention pertains or content that overlaps between the embodiments will be omitted. Terms such as "unit," "module," "member," and "block" used in the specification may be implemented as software or hardware, and according to the embodiments, a plurality of "units," "modules," "members," and "blocks" may be implemented as one component, or one "unit," "module," "member," and "block" may also include a plurality of components.

Throughout the specification, when a first component is described as being "connected" to a second component, this includes not only a case in which the first component is directly connected to the second component but also a case in which the first component is indirectly connected to the second component, and the indirect connection includes connection through a wireless communication network.

In addition, when a certain portion is described as "including" a certain component, it means further including other components rather than precluding other components unless specifically stated otherwise.

Throughout the present specification, when a first member is described as being positioned "on" a second member, this includes both a case in which the first member is in contact with the second member and a case in which a third member is present between the two members.

Terms such as first and second are used to distinguish one component from another, and the components are not limited by the above-described terms.

A singular expression includes plural expressions unless the context clearly dictates otherwise.

In each operation, identification symbols are used for convenience of explanation, and the identification symbols do not describe the order of each operation, and each operation may be performed in a different order from the specified order unless a specific order is clearly described in context.

A re-ranking system for extracting passages having higher relevance to a query among passages included in documents stored in a database according to the present invention may include a device, and the device may include various devices capable of performing computational processing to provide results to a user. For example, the re-ranking system for extracting the passages having higher relevance to the query among the passages included in the documents stored in the database may include at least one of a computer, a server device, and a portable terminal, or may be in any one form having the same or similar functions thereof. However, the present invention is not limited thereto.

Here, the computer may include, for example, a notebook, a desktop, a laptop, a tablet PC, a slate PC, etc., which are equipped with a web browser.

The server device is a server that processes information in communication with an external device, and may include an application server, a computing server, a database server, a file server, a game server, a mail server, a proxy server, and a web server.

The portable terminal is, for example, a wireless communication device ensuring portability and mobility and may include all kinds of handheld-based wireless communication devices such as a personal communication system (PCS), a global system for mobile communications (GSM), a personal digital cellular (PDC), a personal handyphone system (PHS), a personal digital assistant (PDA), international mobile telecommunication-2000 (IMT-2000), code division multiple access-2000 (CDMA-2000), w-code division multiple access (W-CDMA), a wireless broadband internet (WiBro) terminal, a smart phone, and wearable devices such as a watch, a ring, a bracelet, an anklet, a necklace, glasses, contact lenses, or a head-mounted device (HMD).

Hereinafter, embodiments of the present invention will be described in detail with reference to the accompanying drawings.

The present invention relates to a re-ranking system, method, and program for extracting passages having higher relevance to a query, and more particularly, to a re-ranking system, method, and program for extracting passages having higher relevance to a query among passages included in documents stored in a database.

FIG. 2 is a schematic diagram of a re-ranking system for extracting passages having higher relevance to a query according to one embodiment of the present invention.

As shown in FIG. 2, a system 1000 may include a device 210, a database 220, an AI model 230, and a retriever 240.

The device 210, the database 220, the AI model 230, and the retriever 240 included in the system 1000 may perform communication via a network W. Here, the network W may include a wired network and a wireless network. For example, the network may include various networks such as a local area network (LAN), a metropolitan area network (MAN), and a wide area network (WAN).

In addition, the network W may also include the well-known world wide web (WWW). However, the network W according to embodiments of the present invention is not limited to the above-listed networks and may include, at least in part, a well-known wireless data network, a well-known telephone network, or a well-known wired and wireless television network.

The database 220 may include, in the form of data, queries, documents, and passages that are input into the retriever or a large language model (LLM). In addition, the database 220 may include an encoder-decoder structure for converting the queries, the documents, and the passages included in the form of data into vectors or for evaluating relevance between "the queries" and "the documents or the passages." Here, the encoder-decoder structure may be based on a Fusion-in-Decoder (FiD) architecture or a T5-base architecture, but is not limited thereto. In addition, the database 220 may include a model for tournament sorting that executes re-ranking of a plurality of passages.

The device 210 may convert the queries, the documents, and the passages stored in the database 220 into vectors using the encoder-decoder structure. In addition, the device 210 may execute re-ranking of a plurality of passages by performing a plurality of tournament sortings.

Here, the order of the tournament sorting is as follows. First, a plurality of passages are divided into a plurality of groups by pairing the passages in a specific number. Next, through the decoder, relevance between the passages in a group and a query for each group is evaluated, and only the passages having relevance up to a predetermined rank (e.g., the top 1st rant or the top 2nd rank) are extracted. Thereafter, the extracted passages are again paired in a specific number to repeat the operation of evaluating the relevance to the query in the same manner, and through the repeated evaluation, one passage that finally remains is extracted as a final passage. Since the tournament sorting is executed a plurality of times (k times), passages that are finally output through re-ranking are the top k passages.

The k passages that are finally output may be input into another AI model 230 or retriever 240 that is not fine-tuned together with the query that has been the subject for evaluating the relevance, but are not limited thereto. Even when the other AI model 230 or retriever 240 is not fine-tuned, the passages output through the re-ranking exhibit improved zero-shot performance because only the passages relevant to the query are input.

FIG. 2 shows a case in which the database 220 is implemented outside the device 210. In this case, the database 220 may be connected to the device 210 in a wired or wireless communication manner. However, this is only one embodiment, and the database 220 may also be implemented as one component of the device 210.

FIG. 2 shows a case in which the AI model 230 is implemented outside the device 210 (e.g., implemented in a cloud-based manner), but is not limited thereto, and may be implemented as one component of the device 210.

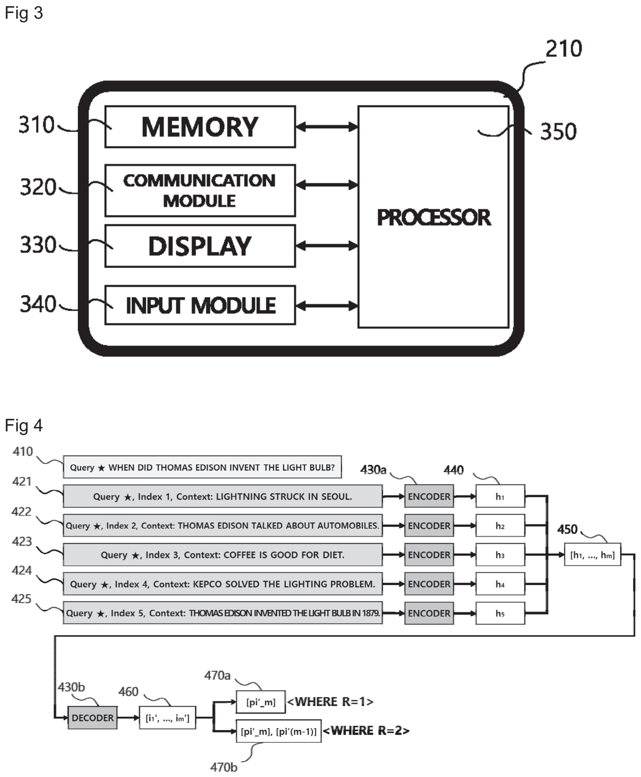

FIG. 3 is a block diagram for explaining a configuration of a re-ranking device for extracting passages having higher relevance to a query according to one embodiment of the present invention.

As shown in FIG. 3, the device 210 may include a memory 310, a communication module 320, a display 330, an input module 340, and a processor 350. However, the present invention is not limited thereto, and software and hardware components of the device 210 may be modified/added/omitted according to a required operation within a scope obvious to those skilled in the art. In addition, the device 210 may be replaced with a system, and the device 210 may include a plurality of devices, and in this case, each component included in the device 210 may be included in at least one of the plurality of devices.

The memory 310 may store data supporting various functions of the device 210 and a program for the operation of the processor 350, store input/output data, and store a plurality of application programs or applications that are driven on the present device, data, command, and the AI model for the operation of the device 210. At least some of the application programs may be downloaded from an external server via wireless communication.

Such memory 310 may include at least one type of storage medium among a flash memory type, a hard disk type, a solid state disk type (SSD type), a silicon disk drive type (SDD type), a multimedia card micro type, a card-type memory (e.g., an SD or XD memory), a random access memory (RAM), a static random access memory (SRAM), a read-only memory (ROM), an electrically erasable programmable ROM (EEPROM), a programmable ROM (PROM), a magnetic memory, a magnetic disk, and an optical disk.

In addition, the memory 310 may be separate from the device, and may include a database that is connected in a wired or wireless communication manner. The database 220 shown in FIG. 1 may be implemented as one component of the memory 310.

The communication module 320 may include one or more components that enable communication with an external device, and may include at least one of, for example, a broadcasting reception module, a wired communication module, a wireless communication module, a short-range communication module, or a position information module.

The wired communication module may include not only various wired communication modules such as a local area network (LAN) module, a wide area network (WAN) module, and a value added network (VAN) module, but also various cable communication modules such as a universal serial bus (USB), a high definition multimedia interface (HDMI), a digital visual interface (DVI), a recommended standard 232 (RS-232), power line communication, and plain old telephone service (POTS).

In addition to the WiFi module and the wireless broadband (WiBro) module, the wireless communication module may include a wireless communication module for supporting various wireless communication methods such as global system for mobile communication (GSM), code division multiple access (CDMA), wideband CDMA (WCDMA), universal mobile telecommunications system (UMTS), time division multiple access (TDMA), long term evolution (LTE), 4G, 5G, or 6G.

The display 330 displays (outputs) information or data that are processed in the device 210, data that are input or output through the AI model 230, etc. In addition, the display 330 may display execution screen information of an application program (e.g., an application) driven on the device 210, or user interface (UI) or graphic user interface (GUI) information according to such execution screen information.

The input module 340 is for receiving information from a user, and when the user inputs information through an input unit, the processor 350 may control the operation of the device 210 to correspond to the input information.

The input module 340 may include a hardware physical key (e.g., a button located on at least one of a front surface, a back surface, and a side surface of the device, a dome switch, a jog wheel, a jog switch, etc.) and a software touch key. As an example, the touch key may be formed as a virtual key, a soft key, or a visual key that is displayed on a touchscreen type of the display 330 through software processing or may be formed as the touch key disposed in a portion other than the touchscreen. Meanwhile, the virtual key or visual key may have various forms and may be displayed on the touchscreen, and may be formed as, for example, a graphic, text, an icon, a video, or a combination thereof.

The processor 350 may be implemented with a memory that stores data for an algorithm for controlling the operations (including training or execution of the AI model) of the components in the device 210 or a program that reproduces the algorithm, and at least one processor (not shown) that performs the above-described operation using the data stored in the memory. In this case, the memory and the processor may each be implemented as separate chips or may be implemented as a single chip.

In one embodiment, the system 1000 or the device 210 according to the present invention may include at least one processor, and when including a plurality of processors, the plurality of processors may be included in different devices 210.

In addition, the processor 350 may control the operations of the components by combining any one or a plurality of the above-described components in order to implement various embodiments according to the present disclosure, which will be described below, on the device 210.

FIG. 4 is a block diagram for explaining a method of selecting, as an output, a passage corresponding to a predetermined rank or higher in relevance to a query using the encoder-decoder structure according to an embodiment of the present invention.

In re-ranking, it is preferable to use the encoder-decoder structure based on the Fusion-in-Decoder (FiD) architecture or the T5-base architecture, and it is preferable to input a specific number (m) of passages (e.g., 5 passages) into the encoder-decoder structure and to re-rank the top r passages (e.g., 1 or 2 passages) as a base operation unit (r).

Specifically, first, passages [$p_1$, ..., $p_m$] are input into an encoder in forms 421, 422, 423, 424, and 425 concatenated with indices (e.g., "1, 2, 3, 4, 5") and a query 410, and are output as result values (hi) [$h_1$, ..., $h_m$] 440 corresponding to the number of passages [$p_1$, ..., $p_m$]. For example, when the query 410 "When did Thomas Edison invent the light bulb?" is given, the query may be output in a form 421 in which a passage p1 "Lightning struck in Seoul." is concatenated, a form 422 in which a passage p2 "Thomas Edison talked about automobiles." is concatenated, a form 423 in which a passage p3 "Coffee is good for diet." is concatenated, a form 424 in which a passage p4 "KEPCO solved the lighting problem." is concatenated, and a form 425 in which a passage p5 "Thomas Edison invented the light bulb in 1879." is concatenated, with indices 1 to 5, respectively. In this case, the result value (hi) may be expressed as follows.

$$h_i = \text{Enc}(\text{"Question: q, Index: } i, \text{Context: } p_i\text{"})$$

In the above equation, q denotes the query, i denotes the index, and pi denotes the passage.

Next, the encoded result values (hi) 440 are concatenated into one sequence [$h_1$, ..., $h_m$] 450 and input into a decoder 430b. The decoder 430b compares relevance of the sequence [$h_1$, ..., $h_m$] 450 to generate a sorted sequence [$i_1'$, ..., $i_m'$] 460 of passage indices (identifiers).

$$[i_1', ..., i_m'] = \text{Dec}(\text{concat}[h_1, ..., h_m]),$$

where $\text{rel}(q, p_{i_1'}) < ... < \text{rel}(q, p_{i_m'})$ )

The decoder 430b generates an output in the order from passages having lower relevance to passages having higher relevance. Compared to conventional listwise re-ranking models that generate indices starting from passages having higher relevance, the present invention generates indices in the order from passages having lower relevance to passages having higher relevance, thereby providing an advantageous inference chain. This is because an elimination method that first removes the passages having lower relevance and makes the last remaining passage the answer can be an advantageous strategy for extracting the passages having higher relevance.

Next, passages corresponding to the base operation unit (r) are extracted from the sequence [$i_1'$, ..., $i_m'$] 460 of the passage indices (identifier) generated by the decoder 430b. The base operation unit (r) may be 1 or 2, but is not limited thereto.

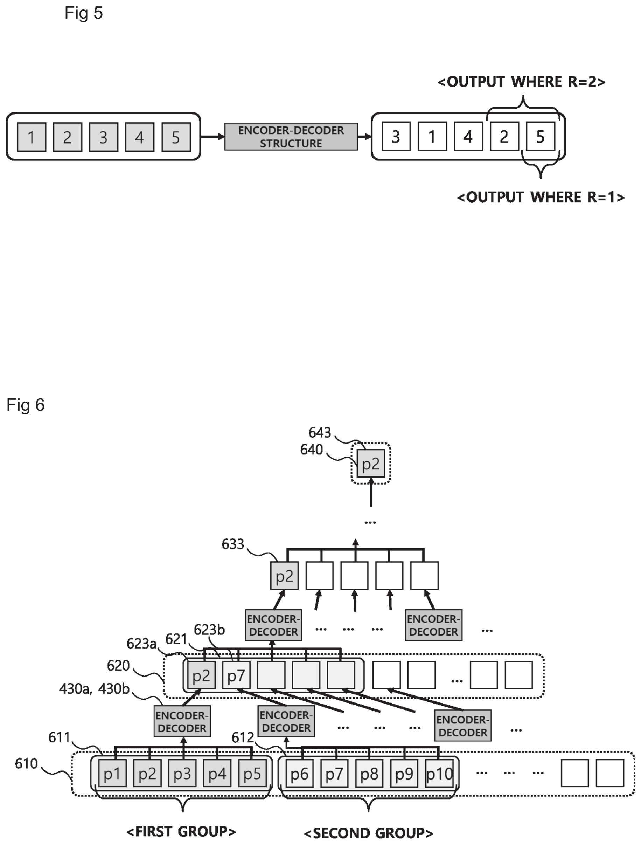

When the base operation unit (r) is 1, only a passage [pi'_m] having the highest predetermined rank (1st rank) from the sequence [$i_1'$, ..., $i_m'$] 460 of the passage indices (identifier) generated by the decoder 430b is extracted and selected as an output 470a. If the indices ware generated in the order from passages having lower relevance to passages having higher relevance as in the preferred embodiment of the present invention, one passage of the last order is selected as an output as shown in FIG. 5 (i.e., where r = 1 in FIG. 5).

When the base operation unit (r) is 2, the passage [pi'_m] having the highest predetermined rank (1st rank) and a passage [p_i'(m-1)] having the next highest predetermined rank (2nd rank) are extracted from the sequence [$i_1'$, ..., $i_m'$] 460 of the passage indices (identifier) generated by the decoder 430b and selected as an output 470b. If the indices ware generated in the order from passages having lower relevance to passages having higher relevance as in the preferred embodiment of the present invention, one passage of the last order or two passages of the last order (i.e., where r = 2 in FIG. 5) are selected as the output as shown in FIG. 5.

FIG. 6 is a block diagram for explaining a method of re-ranking passages by performing a plurality of tournament sortings {when a base operation unit (r) is "1" (up to the top 1st rank in relevance)} according to an embodiment of the present invention.

The present invention relates to re-ranking a final k passages from a number (n) of passages greater than a specific number (m) of passages (e.g., 5 passages). To this end, an algorithm for re-ranking k passages from n passages is proposed by extending the method of extracting the base operation unit (r) (e.g., 1 or 2) from a group of a specific number (m) of passages (e.g., 5 passages).

Specifically, first, n first passages are paired by a specific number (m) to divide into a plurality of groups 610. Preferably, the specific number (m) may be 5, but is not limited thereto.

The first passages (p1, etc.) included in each group (e.g., a first group 611) are input to the encoder 430a in a form concatenated with the indices (i = 1, 2, 3, 4, 5) and the query 410 as described in FIG. 4, the relevance between a plurality of passages (e.g., [$p_1$, ..., $p_5$] of the first group 611) and the query for each group is evaluated to represent a sequence [$h_1$, ..., $h_m$] 450 of result values (hi) (e.g., [h1, ..., h5] in the case of the first group 611), and the sequence is input to the decoder 430b to generate a sorted sequence [$i_1'$, ..., $i_m'$] 460 (e.g., [$i_1'$, ..., $i_5'$] in the case of the first group) of first passage indices (identifiers). Here, [$i_1'$, ..., $i_m'$] may be output in the order from passages having lower relevance to passages having higher relevance, but is not limited thereto.

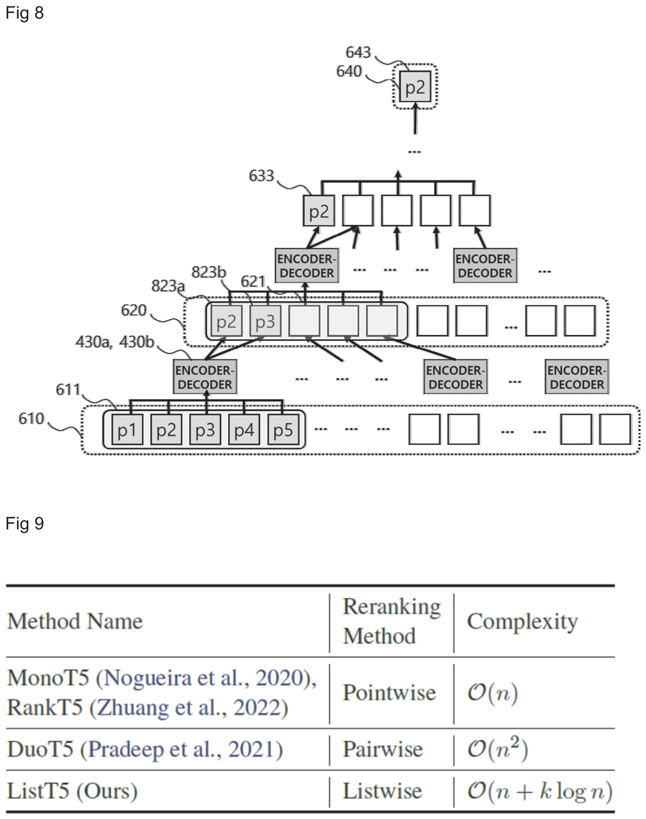

Next, the decoder 430b extracts the first passages of the base operation unit (r) from the generated sequence $[i_1', ..., i_m']$ 460 of the first passage indices (identifiers) and outputs the extracted first passages as second passages (p2) 623a. The base operation unit (r) refers to an order that outputs higher relevance up to a predetermined rank, and may be 1 or 2 (i.e., "the top 1st rank in relevance" or "from the top 1st rank to the top 2nd rank in relevance), but is not limited thereto. The case of the present embodiment shown in FIG. 6 is an embodiment in which the base operation unit (r) is 1, and the second passage (p2) 623a that are passages up to the top 1st rank in relevance are output {FIG. 6 is an embodiment in which the base operation unit (r) is 1 (up to the top 1st rank in relevance), and an embodiment in which the base operation unit (r) is 2 (from the top 1st rank to 2nd rank in relevance) is shown in FIG. 8.}.

In addition, for groups including the remaining n first passages whose specific illustration is omitted, including the group indicated as a second group 612 in FIG. 6, an operation of extracting passages having higher relevance is performed in the same manner as the first group 611 described above. Referring to the second group 612 as an example, relevance is evaluated for passages $[p_6, ..., p_{10}]$ belonging to the second group 612 to represent a sequence $[h_6, ..., h_{10}]$, the sequence is input into the decoder 430b to generate a sorted sequence $[i_6', ..., i_{10}']$ of indices, and then, the sorted sequence is output in the order from passages having lower relevance to passages having higher relevance. Thereafter, the decoder 430b extracts a passage of the base operation unit (r) from $[i_6', ..., i_{10}']$ to output the extracted passage as the second passage (e.g., p7 in the case of FIG. 6).

Next, the second passages (e.g., p2 623a, p7 623b, etc.) output from each group are again paired by a specific number (m) (e.g., 5) to divide into a plurality of groups 620, and the second passages (e.g., p2 623a, p7 623b, etc.) included in each (e.g., a second group 621) of the plurality of groups 620 are input into the encoder 430a to represent a sequence in the same manner as that performed in the first group 610, and the sequence is again input into the decoder 430b to output third passages 633 of the base operation unit having higher relevance up to a predetermined rank.

Thereafter, the same operations as those of the first and second passages are repeated for the third passages 633 and the same operations are also repeated for the nth passages output thereby. These operations are repeated until only one passage 643 is finally output.

The one passage 643 that is finally output is extracted as the passage having the highest relevance.

The method of extracting one passage (p2) 643 having the highest relevance to the query in this manner is called tournament sorting.

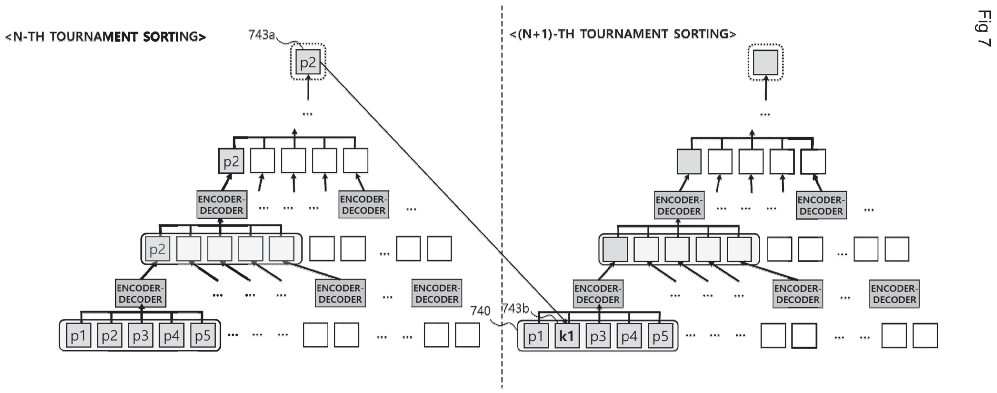

FIG. 7 is a block diagram for extracting a plurality of passages having higher relevance to the query 410 by performing the tournament sorting a plurality of times.

It is possible to extract only one passage having the highest relevance to the query by performing the tournament sorting a single time, and according to the present invention, it is also possible to extract a plurality of passages having higher relevance to the query 410 by performing the tournament sorting a plurality of as shown in FIG. 7.

For example, the tournament sorting described above is repeatedly performed, wherein after extracting one passage (p2) 743a having the highest relevance in a first tournament sorting, a second tournament sorting is performed on the same n passages, but the second tournament sorting is performed by randomly replacing the one passage (p2) 743a having the highest relevance with another passage (k1) 743b.

Therefore, a passage having higher relevance may be extracted from among other passages excluding the one passage (p2) 743a having the highest relevance.

Here, according to the present invention, at least one result of relevance evaluation performed in at least one tournament sorting may be reused in an operation of evaluating relevance of any other one or more tournament sortings.

Specifically, when the one passage 743a having the highest relevance is replaced with the other passage 743b, results of relevance evaluation of other groups excluding a group 740 including the other passage 743b may appear the same as the result of previously performed tournament sorting. Accordingly, it is preferable to reuse the results of previously performed tournament sorting in newly performed tournament sorting (such a computational method is called output caching).

Therefore, by reusing stored results to reduce redundant computations, overall computational cost can be lowered and results can be output efficiently and quickly.

FIG. 8 is a block diagram for re-ranking passages by performing the plurality of tournament sortings {where the base operation unit (r) is "2" (from the top 1st rank to the top 2nd rank in relevance)} according to an embodiment of the present invention.

In the embodiment shown in FIG. 8, there is a difference only in that an embodiment in which the base operation unit (r) is 2 is shown. That is, there is a difference from the embodiment shown in FIG. 6 only in that passages from the top 1st rank to 2nd rank in relevance are extracted and output as second passages (p2 and p3) 823a and 823b, rather than extracting only the passage of the top 1st rank in relevance and outputting the extracted passage as the second passage (elements having the same reference numerals as those in FIG. 6 are executed in the same manner as that of the embodiment of FIG. 6).

Hereinafter, asymptotic complexity of listwise re-ranking according to the present invention will be described. Specifically, according to the present invention, when executing the first tournament sorting, since relevance of all passages needs to be evaluated, the complexity may be represented by the following equation.

$$n\left(\frac{1}{m} + \frac{r}{m^2} + \frac{r^2}{m^3} + ...\right) = \frac{n}{m}\frac{m}{m-r}$$

According to the present invention, since n>>m, the complexity may be represented as n, that is, O(n). Meanwhile, once a tournament tree is constructed, most values of the existing tournament sorting are reused when performing tournament sorting again. Accordingly, only one path of the tournament sorting needs to be recalculated. That is, since most nodes and edges are cached, the value of one tournament sorting is reused during repeating tournament sorting k times, and accordingly, only an $O(log_2 n)$ cost is asymptotically required for repetitive tournament sorting. Therefore, the listwise re-ranking according to the present invention finally requires an asymptotic cost of $O(n + k * log_m n)$.

FIG. 9 shows the results of comparing the complexity of the present invention with other models. The present invention has an advantage of being efficient because it has a complexity significantly lower than the complexity of the pairwise re-ranking model (DuoT5) that compares each passage in pairs, that is, O(n^2). In addition, the present invention has a complexity nearly equivalent to that of the pointwise models (MonoT5 and RankT5) that compare each passage one-to-one, and exhibits superior performance on average in computational performance and BEIR performance (performance of extracting passages having higher relevance) as described below.

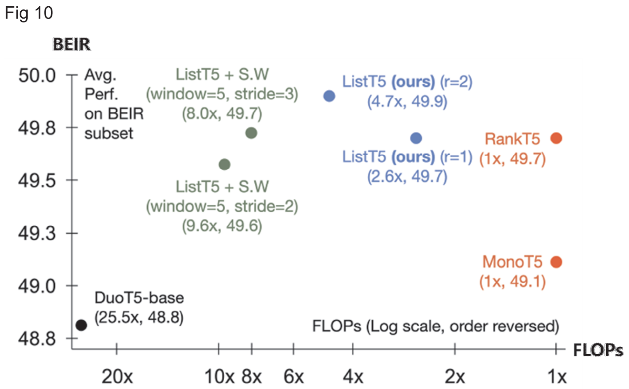

FIG. 10 shows results of comparing the computational performance (Floating Point Operations per Second (FLOPs) (x-axis) and the BEIR performance (y-axis) for evaluating relevance of passages of the present invention with other models. The present invention, denoted as LISTT5 (r=1) and LISTT5 (r=2), has been demonstrated to exhibit superior performance in the computational performance and the BEIR performance compared to conventional pointwise models (MonoT5 and RankT5).

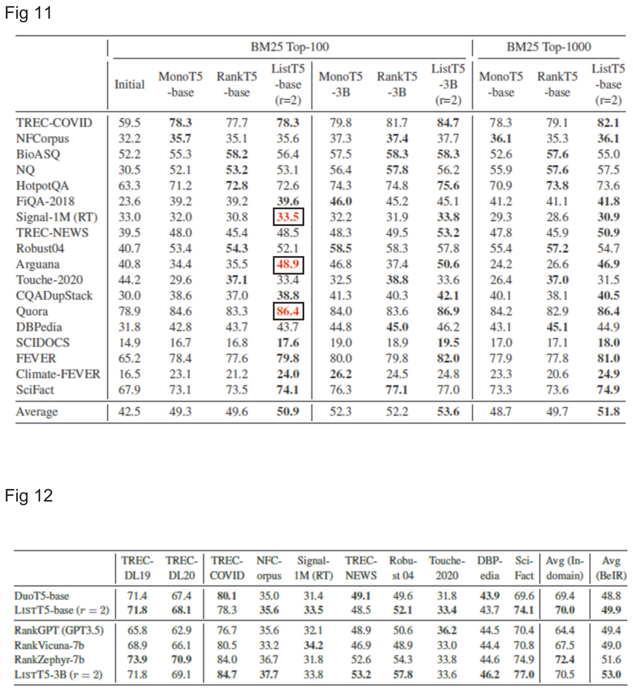

FIG. 11 shows the results of comparing the present invention with pointwise models (MonoT5 and RankT5) in NDCG@10 based on BEIR. For datasets indicated by boxes in LISTT5-base, the present invention exhibited superior performance in both performance and model size compared to prior arts (MonoT5-3B or RankT5-3B).

FIG. 12 is a table showing the results of comparing the present invention with the listwise re-ranking models (RankGPT, RankVicuna, and RankZephyr) and the pairwise re-ranking model (DuoT5) that are prior arts based on NDCG@10. Initial results were based on BM25 Top100, and scores including RankGPT (GPT-3.5-turbo-0301) were based on the RankGPT paper. The present invention {LISTT5-3B (r=2)} shows high performance in most datasets, and particularly shows superior performance to the listwise re-ranking models (RankGPT, RankVicuna, and RankZephyr) and the pairwise re-ranking model (DuoT5) in BEIR subsets.

Hereinafter, the effects of the present invention will be described.

According to the present invention, since significantly lower complexity {$O(log_2 n)$} is required compared to prior art, and efficient architectures such as FiD or T5-base rather than large language models (LLMs) are adopted, it is possible to efficiently process computations.

According to the present invention, due to the characteristics of FiD, passages can be distinguished through indices rather than the position of each input passage, thereby exhibiting enhanced robustness against the lost in the middle problem.

According to the present invention, through methods such as performing tournament sorting or generating outputs in the order from passages having lower relevance to passages having higher relevance, zero-shot performance on the BEIR benchmark can be improved compared to prior art (refer to FIGS. 11 and 12).

Meanwhile, a re-ranking method for extracting passages with higher relevance to a query according to embodiments of the present invention may be implemented by the system described with reference to FIG. 1.

The systems according to embodiments of the present invention may be controlled, executed, trained, driven, etc. by the processor, and accordingly, at least one of the tasks of executing, training, and driving the systems may be performed by at least one processor. In addition, the systems may be stored in the memory, and the feature data according to the present invention may also be stored in the memory.

Meanwhile, disclosed embodiments may be implemented in the form of a recording medium in which computer-executable commands are stored. The commands may be stored in the form of program code, and when executed by the processor, program modules may be generated to perform operations of the disclosed embodiments. The recording medium may be implemented as a computer-readable recording medium.

The computer-readable recording medium includes all types of recording media in which computer-decodable commands are stored. For example, there may be a read only memory (ROM), a random access memory (RAM), a magnetic tape, a magnetic disk, a flash memory, an optical data storage device, and the like.

As described above, the disclosed embodiments have been described with reference to the accompanying drawings. Those skilled in the art to which the present disclosure pertains will understand that the present disclosure may be implemented in different forms from the disclosed embodiments without departing from the technical spirit or essential features of the present disclosure. The disclosed embodiments are illustrative and should not be construed as being limited.

**Claims**

1. A system comprising:

   at least one processor; and
   a memory storing one or more commands,
   wherein
   the at least one processor executes the one or more commands stored in the memory to perform re-ranking of a plurality of passages by performing a plurality of tournament sortings,
   wherein the tournament sorting comprises:

   pairing first passages included in the passages in a specific number to divide the first passages into a plurality of groups, evaluating relevance between the first passages included in a group and a query for each group, and extracting passages having higher relevance up to a predetermined rank among the first passages to output the extracted first passages as second passages; and
   pairing the second passages in a specific number to divide the second passages into a plurality of groups, evaluating relevance between the second passages included in a group and the query for each group, and extracting passages having higher relevance up to a predetermined rank among the second passages to output the extracted second passages as third passages.

2. The system of claim 1, wherein
   the first passages identical to the third passages output from at least one of the tournament sortings are not used as targets for evaluating the relevance in any one or more of the tournament sortings performed thereafter.

3. The system of claim 1, wherein
   at least one of the results of relevance evaluation performed in at least one of the tournament sortings is reused in an operation of evaluating the relevance in any one or more of the tournament sortings performed thereafter.

4. The system of claim 1, wherein
   the operation of evaluating the relevance generates outputs in the order from lower relevance to higher relevance.

5. The system of claim 1, wherein
   the relevance is evaluated through an encoder-decoder structure, and the encoder-decoder structure is a FiD architecture or a T5-base architecture.

6. The system of claim 1, wherein
   the query or the passage is converted into a vector from data stored in a database.

7. The system of claim 1, wherein
   the specific number is 5.

8. The system of claim 1, wherein
   the predetermined rank is the top 1st rank or the top 2nd rank.

9. A method performed by at least one processor for executing a re-ranking of a plurality of passages by performing a plurality of tournament sortings, the method comprising:

   pairing first passages included in the passages in a specific number to divide the first passages into a plurality of groups, evaluating relevance between the first passages included in a group and a query for each group, and extracting passages having high relevance up to a predetermined rank among the first passages to output the extracted first passages as second passages; and
   pairing the second passages in a specific number to divide the second passages into a plurality of groups, evaluating relevance between the second passages included in a group and the query for each group, and extracting passages having higher relevance up to a predetermined rank among the second passages to output the extracted second passages as third passages.

10. The method of claim 9, wherein
the first passages identical to the third passages output from at least one of the tournament sortings are not used as targets for evaluating the relevance in any one or more of the tournament sortings performed thereafter.

11. The method of claim 9, wherein
at least one of the results of relevance evaluation performed in at least one of the tournament sortings is reused in an operation of evaluating the relevance in any one or more of the tournament sortings performed thereafter.

12. The method of claim 9, wherein
the operation of evaluating the relevance generates outputs in the order from lower relevance to higher relevance.

13. The method of claim 9, wherein
the relevance is evaluated through an encoder-decoder structure, and the encoder-decoder structure is a FiD architecture or a T5-base architecture.

14. The method of claim 9, wherein
the query or the passage is converted into a vector from data stored in a database.

15. The method of claim 9, wherein
the specific number is 5.

16. The method of claim 9, wherein
the predetermined rank is the top 1st rank or the top 2nd rank.

17. A program stored in a computer-readable recording medium to execute the method of any one of claims 9 to 16 on a computer.

Fig. 1

Fig 2

Fig 3

Fig 4

Fig 5

<OUTPUT WHERE R=2>

<OUTPUT WHERE R=1>

Fig 6

Fig 7

Fig 8

Fig 9

| Method Name | Reranking Method | Complexity |
|---|---|---|
| MonoT5 (Nogueira et al., 2020), RankT5 (Zhuang et al., 2022) | Pointwise | $\mathcal{O}(n)$ |
| DuoT5 (Pradeep et al., 2021) | Pairwise | $\mathcal{O}(n^2)$ |
| ListT5 (Ours) | Listwise | $\mathcal{O}(n + k \log n)$ |

Fig 10

**BEIR**

Avg. Perf. on BEIR subset

ListT5 + S.W (window=5, stride=3) (8.0x, 49.7)

ListT5 **(ours)** (r=2) (4.7x, 49.9)

RankT5 (1x, 49.7)

ListT5 **(ours)** (r=1) (2.6x, 49.7)

ListT5 + S.W (window=5, stride=2) (9.6x, 49.6)

MonoT5 (1x, 49.1)

DuoT5-base (25.5x, 48.8)

FLOPs (Log scale, order reversed)

FLOPs

50.0  49.8  49.5  49.3  49.0  48.8

20x  10x 8x  6x  4x  2x  1x

Fig 11

| | BM25 Top-100 | | | | | | BM25 Top-1000 | | |
|---|---|---|---|---|---|---|---|---|---|
| | Initial | MonoT5 -base | RankT5 -base | ListT5 -base (r=2) | MonoT5 -3B | RankT5 -3B | ListT5 -3B (r=2) | MonoT5 -base | RankT5 -base | ListT5 -base (r=2) |
| TREC-COVID | 59.5 | **78.3** | 77.7 | **78.3** | 79.8 | 81.7 | **84.7** | 78.3 | 79.1 | **82.1** |
| NFCorpus | 32.2 | **35.7** | 35.1 | 35.6 | 37.3 | **37.4** | 37.7 | **36.1** | 35.3 | **36.1** |
| BioASQ | 52.2 | 55.3 | **58.2** | 56.4 | 57.5 | **58.3** | **58.3** | 52.6 | **57.6** | 55.0 |
| NQ | 30.5 | 52.1 | **53.2** | 53.1 | 56.4 | **57.8** | 56.2 | 55.9 | **57.6** | 57.5 |
| HotpotQA | 63.3 | 71.2 | **72.8** | 72.6 | 74.3 | 74.8 | **75.6** | 70.9 | **73.8** | 73.6 |
| FiQA-2018 | 23.6 | 39.2 | 39.2 | **39.6** | **46.0** | 45.2 | 45.1 | 41.2 | 41.1 | **41.8** |
| Signal-1M (RT) | 33.0 | 32.0 | 30.8 | 33.5 | 32.2 | 31.9 | **33.8** | 29.3 | 28.6 | **30.9** |
| TREC-NEWS | 39.5 | 48.0 | 45.4 | 48.5 | 48.3 | 49.5 | **53.2** | 47.8 | 45.9 | **50.9** |
| Robust04 | 40.7 | 53.4 | **54.3** | 52.1 | **58.5** | 58.3 | 57.8 | 55.4 | **57.2** | 54.7 |
| Arguana | 40.8 | 34.4 | 35.5 | 48.9 | 46.8 | 37.4 | **50.6** | 24.2 | 26.6 | **46.9** |
| Touche-2020 | 44.2 | 29.6 | **37.1** | 33.4 | 32.5 | **38.8** | 33.6 | 26.4 | **37.0** | 31.5 |
| CQADupStack | 30.0 | 38.6 | 37.0 | **38.8** | 41.3 | 40.3 | **42.1** | 40.1 | 38.1 | **40.5** |
| Quora | 78.9 | 84.6 | 83.3 | 86.4 | 84.0 | 83.6 | **86.9** | 84.2 | 82.9 | **86.4** |
| DBPedia | 31.8 | 42.8 | 43.7 | 43.7 | 44.8 | **45.0** | 46.2 | 43.1 | **45.1** | 44.9 |
| SCIDOCS | 14.9 | 16.7 | 16.8 | **17.6** | 19.0 | 18.9 | **19.5** | 17.0 | 17.1 | **18.0** |
| FEVER | 65.2 | 78.4 | 77.6 | **79.8** | 80.0 | 79.8 | **82.0** | 77.9 | 77.8 | **81.0** |
| Climate-FEVER | 16.5 | 23.1 | 21.2 | **24.0** | 26.2 | 24.5 | 24.8 | 23.3 | 20.6 | **24.9** |
| SciFact | 67.9 | 73.1 | 73.5 | **74.1** | 76.3 | **77.1** | 77.0 | 73.3 | 73.6 | **74.9** |
| Average | 42.5 | 49.3 | 49.6 | **50.9** | 52.3 | 52.2 | **53.6** | 48.7 | 49.7 | **51.8** |

Fig 12

| | TREC-DL19 | TREC-DL20 | TREC-COVID | NFC-orpus | Signal-1M (RT) | TREC-NEWS | Robu-st 04 | Touche-2020 | DBP-edia | Sci-Fact | Avg (In-domain) | Avg (BeIR) |
|---|---|---|---|---|---|---|---|---|---|---|---|---|
| DuoT5-base | 71.4 | 67.4 | **80.1** | 35.0 | 31.4 | **49.1** | 49.6 | 31.8 | **43.9** | 69.6 | 69.4 | 48.8 |
| LISTT5-base ($r = 2$) | **71.8** | **68.1** | 78.3 | **35.6** | **33.5** | 48.5 | **52.1** | **33.4** | 43.7 | **74.1** | **70.0** | **49.9** |
| RankGPT (GPT3.5) | 65.8 | 62.9 | 76.7 | 35.6 | 32.1 | 48.9 | 50.6 | **36.2** | 44.5 | 70.4 | 64.4 | 49.4 |
| RankVicuna-7b | 68.9 | 66.1 | 80.5 | 33.2 | **34.2** | 46.9 | 48.9 | 33.0 | 44.4 | 70.8 | 67.5 | 49.0 |
| RankZephyr-7b | **73.9** | **70.9** | 84.0 | 36.7 | 31.8 | 52.6 | 54.3 | 33.8 | 44.6 | 74.9 | **72.4** | 51.6 |
| LISTT5-3B ($r = 2$) | 71.8 | 69.1 | **84.7** | **37.7** | 33.8 | **53.2** | **57.8** | 33.6 | **46.2** | **77.0** | 70.5 | **53.0** |

EP 4 682 764 A1

## INTERNATIONAL SEARCH REPORT

| International application No. |
| --- |
| **PCT/KR2025/099350** |

**A. CLASSIFICATION OF SUBJECT MATTER**

**G06N 3/0455**(2023.01)i; **G06F 16/2457**(2019.01)i; **G06F 16/334**(2025.01)i; **G06F 16/338**(2019.01)i; **G06F 18/2135**(2023.01)i

According to International Patent Classification (IPC) or to both national classification and IPC

**B. FIELDS SEARCHED**

Minimum documentation searched (classification system followed by classification symbols)

G06N 3/0455(2023.01); G06F 16/2453(2019.01); G06F 16/28(2019.01); G06F 17/21(2006.01): G06F 17/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 쿼리(query), 문단(paragraph), 리-랭킹(re-ranking), 대규모 언어 모델(large language model), 토너먼트(tournament), FiD(fusion-in-Decoder)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | BERETTA, Lorenzo et al. An Optimal Algorithm for Finding Champions in Tournament Graphs. In: IEEE Transactions on Knowledge and Data Engineering. Volume 35, Issue 10, 01 October 2023.<br>See pages 10198, 10202-10203, 10205 and 10207. | 1-4,7-12,15-17<br>5-6,13-14 |
| Y | 이성민 등. R2FID: Joint Reranker기반 Fusion-In-Decoder를 이용한 오픈 도메인 테이블 질의 응답. 정보과학회논문지. vol. 50, no. 10, pp. 874-881, October 2023 (LEE, Sung-Min et al. R2FID: Joint Reranker in Fusion-In-Decoder for Open Domain Question Answering over Tables. Korean Institute of Information Scientists and Engineers.)<br>See pages 876-877. | 5-6,13-14 |
| A | ZHANG, Zongmeng et al. Hybrid and Collaborative Passage Reranking. arXiv:2305.09313v1. May 2023. [Retrieved on 23 April 2025]. Retrieved from <https://arxiv.org/pdf/2305.09313v1>.<br>See page 2. | 1-17 |
| A | KR 10-2435849 B1 (HOSEO UNIVERSITY ACADEMIC COOPERATION FOUNDATION et al.) 25 August 2022 (2022-08-25)<br>See paragraphs [0063]-[0066]; and claim 1. | 1-17 |

☑ Further documents are listed in the continuation of Box C.  ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **14 May 2025** | **15 May 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2025/099350** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-1056412 B1 (INDUSTRIAL COOPERATION FOUNDATION JEONBUK NATIONAL UNIVERSITY) 11 August 2011 (2011-08-11)<br>    See claims 1 and 3. | 1-17 |
| PX | YOON, Soyoung et al. ListT5: Listwise Reranking with Fusion-in-Decoder Improves Zero-shot Retrieval. arXiv:2402.15838v3. June 2024. [Retrieved on 23 April 2025]. Retrieved from <https://arxiv.org/pdf/2402.15838v3>.<br>    See entire document. | 1-17 |

Form PCT/ISA/210 (second sheet) (July 2022)

**INTERNATIONAL SEARCH REPORT**
Information on patent family members

International application No.

**PCT/KR2025/099350**

| Patent document cited in search report | | | Publication date (day/month/year) | Patent family member(s) | | | Publication date (day/month/year) |
|---|---|---|---|---|---|---|---|
| KR | 10-2435849 | B1 | 25 August 2022 | KR | 10-2022-0099160 | A | 13 July 2022 |
| KR | 10-1056412 | B1 | 11 August 2011 | KR | 10-2010-0096564 | A | 02 September 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RODRIGO NOGUEIRA et al.** *Document Ranking with a Pretrained Sequence-to-Sequence Model*, 2020
- **HONGLEI ZHUANG et al.** *RankT5: Fine-Tuning T5 for Text Ranking with Ranking Losses*, 2022
- **RONAK PRADEEP et al.** *The expando-mono-duo design pattern for text ranking with pretrained sequence-to-sequence models*, 2021